# EUROPEAN PATENT APPLICATION

(11) **EP 4 706 880 A1**
(43) Date of publication of application: **11.03.2026**
(21) Application number: 25199147.7
(22) Date of filing: 29.08.2025
(51) Int. Cl.: B23Q 1/76, B23B 25/00, B23Q 16/00

(54) **SUPPORT DEVICE FOR AXIALLY SUPPORTING A WORKPIECE DURING A MACHINING OPERATION**

(30) Priority: 10.09.2024 IT 202400020104
(71) Applicant: Torneria Meccanica Lozza S.r.l., 26012 Castelleone, Cremona (IT)
(72) Inventor: LOZZA, Marco, I-26012 Castelleone, Cremona (IT)
(74) Representative: Zanardelli, Davide

(57) **Abstract**

The present invention relates to a support device (1) for axially supporting a workpiece (2) during a machining operation.

Said device (1) is adapted to be engaged with a piece of machine tool equipment (3) and comprises a pin (4) and a rolling member (5).

The pin (4) has a main extension along a pin axis (P) and comprises, in axial sequence: a coupling portion (41), a protruding portion (42), and a tooling portion (43).

The coupling portion (41) is adapted to be inserted into a housing (30) obtained in the machine tool equipment (3).

The protruding portion (42) has a greater radial size than the coupling portion (41).

The tooling portion (43) has a smaller radial size as compared with the protruding portion (42).

The rolling member (5) is engaged with the tooling portion (43) and acts as an axial end stop for the workpiece (2), so as to allow the execution of the axial and/or radial machining operation on the workpiece (2) without the use of a tailstock (31).

## Description

The present invention falls within the technical field of equipment for machine tools; in particular, the object of the present invention is a support device adapted to support a workpiece during a machining operation.

As is known, to perform turning machining operations on a workpiece - for example a joint and preferably a cardan joint or at least a part thereof - one end of the workpiece is connected to a spindle provided with a self-centering device, so that the workpiece is fixedly connected to the spindle. A steady rest is also used for the radial support of the workpiece to be turned. Therefore, in this first configuration, the spindle is responsible both for rotating and for connecting and locking the workpiece, while the steady rest only provides radial support. By constraining the workpiece to the self-centering device, any axial displacement of the workpiece is prevented; in other words, the workpiece cannot move along a workpiece rotation axis. This first configuration is well known to the skilled technician in the field and, in addition to allowing the turning of the workpiece, also makes it possible to carry out machining operations along the workpiece rotation axis, such as drilling, tapping, boring, etc.

Where the workpiece cannot be connected to the spindle via the self-centering device, and therefore it is not possible to adopt the first turning configuration, a hole is made at each of the two ends of the workpiece. In particular, the hole made at a first end is engaged by a puller, while the hole made at a second end (opposite to the first) is engaged by a tailstock. The puller is on one side connected and fixed to the spindle and on the opposite side engages the hole of the first end of the workpiece; therefore, the puller drives the rotation of the workpiece without the workpiece being fixedly connected to it. In technical jargon, it is said that the puller "drives" the rotation of the workpiece. The tailstock, which engages the hole of the second end of the workpiece, pushes the workpiece against the puller so as to prevent any axial displacement thereof. Therefore, in this second configuration, the workpiece is clamped between the tailstock and the puller, and it is thus possible to carry out turning machining operations; the puller imparts rotation to the workpiece, while the tailstock axially supports the workpiece during turning.

Disadvantageously, the second configuration requires the tailstock to ensure axial support of the workpiece. It is clear that, in the absence of the tailstock, the workpiece would fall to the ground, as there would be no axial compression force pushing the workpiece against the puller.

Moreover - since the tailstock cannot be removed in the second configuration - it is not possible to face the second end and/or perform machining operations along the workpiece rotation axis, such as drilling, tapping, boring, etc.

Since some workpieces cannot be connected to the spindle via the self-centering device, and therefore require the adoption of the second configuration, after performing the turning operations it is necessary to move the workpiece to a machining centre for the execution of facing and/or axial machining operations (drilling, tapping, boring, etc.).

It is clear that moving the workpiece from the lathe to the machining centre complicates the machining of the workpiece itself and involves a considerable time commitment in terms of both man-hours and machine-hours.

Moreover, in order to obtain the finished workpiece, it is necessary to have both a lathe and a machining centre.

The purpose of the present invention is to propose a support device, a machining and support assembly, and a method for carrying out an axial and/or radial machining operation which are capable of overcoming at least in part the drawbacks mentioned above.

In particular, the purpose of the present invention is to make it possible to obtain a finished workpiece using only one machine tool, for example a lathe and preferably a multitasking lathe.

Said purpose is achieved by means of a support device according to claim 1, a machining and support assembly according to claim 9, and a method for carrying out an axial and/or radial machining operation according to claim 15. The dependent claims describe preferred embodiments of the invention.

The features and advantages of the support device, the assembly, and the method according to the invention will nonetheless become evident from the following description of preferred examples of embodiment/execution thereof, given by way of non-limiting example, with reference to the accompanying figures, in which:
- Figure 1 is a perspective view of a support device;

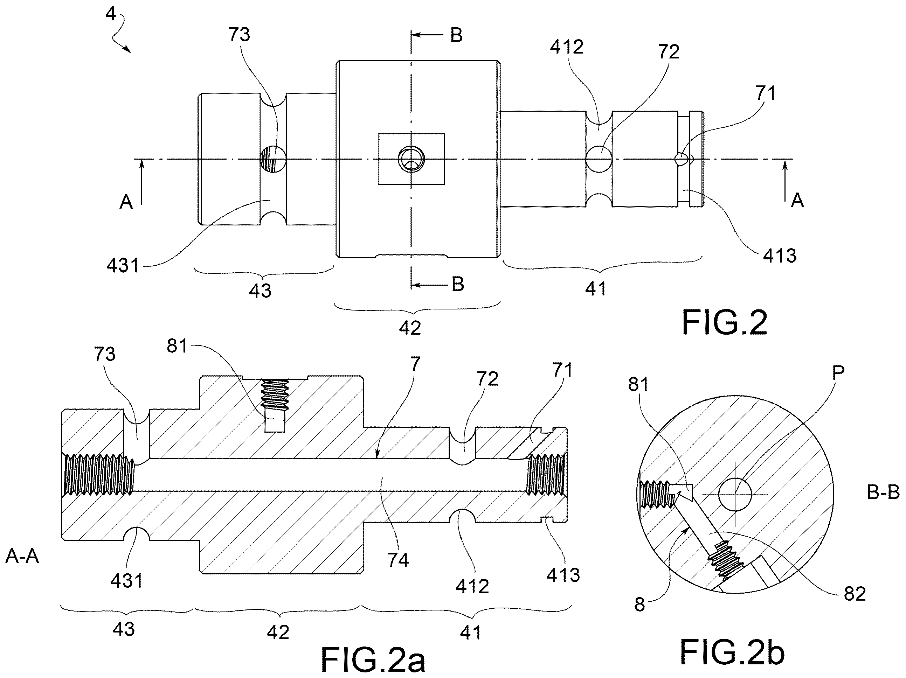

- Figure 2 is a top view of a pin in a first embodiment;
- Figures 2a-2b are sectional views respectively taken along the section planes A-A and B-B identified in figure 2;
- Figure 3 is a perspective view of the pin in a second embodiment;
- Figures 3a-3b are respectively a top view and an axial section of the pin of figure 3;
- Figure 4 is a top view of the pin in a third embodiment;

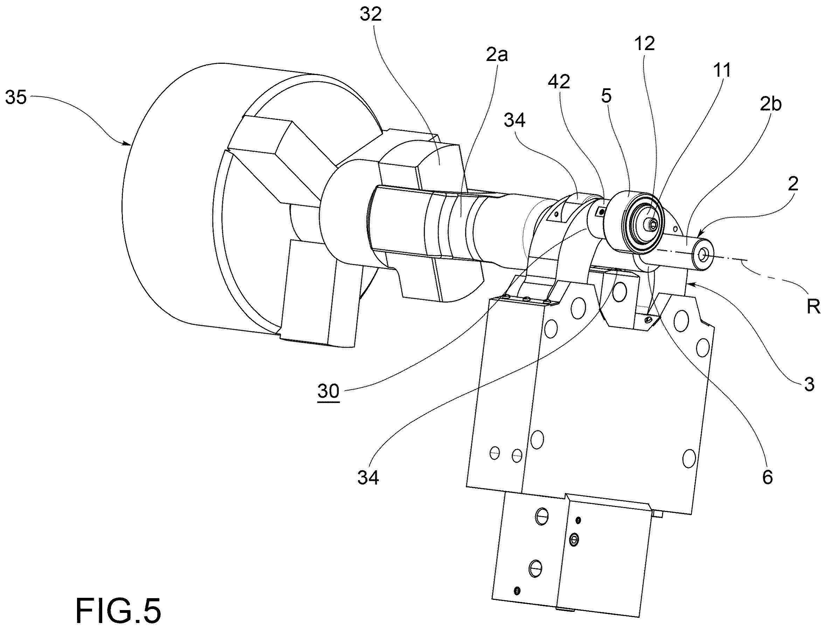

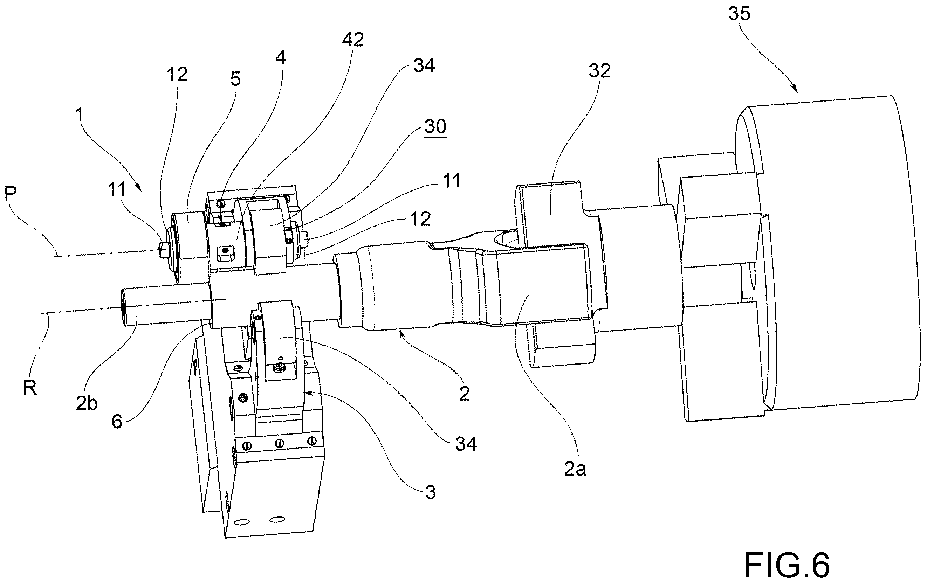

- Figures 5-6 are perspective views from different angles of the support device engaged with a piece of machine tool equipment;
- Figure 7 is a perspective view of a machining and support assembly;
- Figures 8-8a are respectively a perspective view and an axial section of a jig;
- Figure 9 is a perspective view of the support device engaged with the machine tool equipment of a lathe.

In the continuation of the description, elements common to the various embodiments represented in the drawings are denoted by the same reference numbers.

In said drawings, 1 denotes a support device according to the invention as a whole.

According to the present invention, the support device 1 is adapted to axially support a workpiece 2 during a machining operation, in particular a turning machining operation.

Preferably, the workpiece 2 extends predominantly along a workpiece rotation axis R between a first end 2a and a second end 2b opposite the first.

The first end 2a is engageable with a puller 32.

Preferably, the workpiece 2 has axial symmetry, i.e., it is symmetrical with respect to the workpiece rotation axis R.

The device 1 is engageable with a piece of machine tool equipment 3 and comprises a pin 4 and a rolling member 5.

The pin 4 has a main extension along a pin axis P and comprises, in axial sequence: a coupling portion 41, a protruding portion 42, and a tooling portion 43.

Preferably, the workpiece rotation axis R and the pin axis P are parallel to one another.

For the purposes of the present discussion and unless otherwise specified, the term "axial" and its derivatives refer to a direction parallel (or coincident) to the workpiece rotation axis R and/or to the pin axis P. Conversely, the term "radial" and its derivatives refer to a direction orthogonal to the workpiece rotation axis R and/or to the pin axis P.

The coupling portion 41 is adapted to be inserted into a housing 30 obtained in the machine tool equipment 3.

The protruding portion 42 has a greater radial size than the coupling portion 41. Preferably, the protruding portion 42 has a greater diameter than the coupling portion 41.

The tooling portion 43 has a smaller radial size as compared with the protruding portion 42. Preferably, the tooling portion 43 has a reduced diameter as compared with the protruding portion 42.

For example, the coupling portion 41 and the tooling portion 43 have the same diameter.

The rolling member 5 is engaged with the tooling portion 43 and acts as an axial end stop for the workpiece 2, so as to allow the execution of an axial and/or radial machining operation on the workpiece 2 without the use of a tailstock 31.

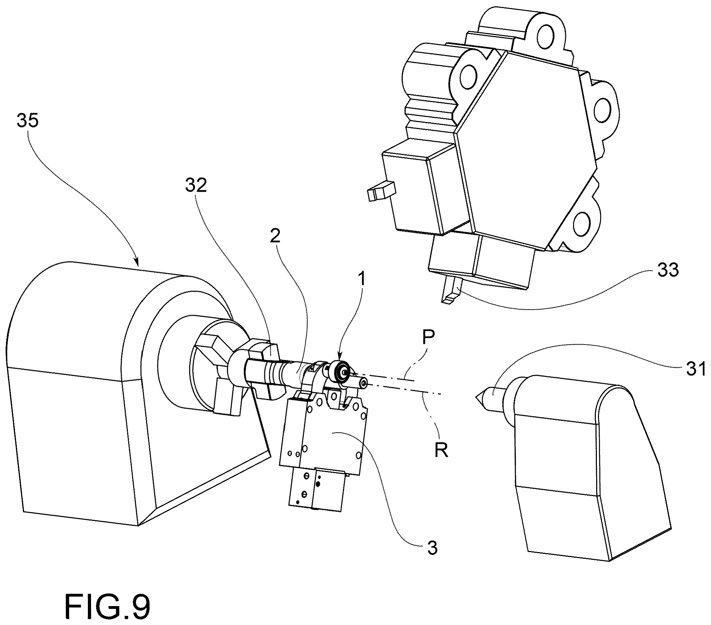

In particular, the radial machining operation of facing is carried out with a tool 33 movable radially (figure 9). Conversely, the axial machining operations of drilling, tapping, boring, etc., are carried out with additional tools translatable axially.

The rolling member 5 is adapted to engage the workpiece 2 with calibrated axial clearance, i.e., there may be a gap between the workpiece 2 and the rolling member 5. In particular, the axial clearance of the workpiece 2 relative to the rolling member 5 allows a displacement of the workpiece 2 along the workpiece rotation axis R; said displacement is such that the workpiece 2 cannot fall to the ground due to a lack of axial support. By way of example, the displacement is in the order of tenths or hundredths of a millimetre.

According to an alternative embodiment, the rolling member 5 is adapted to abut against a load application surface 6; therefore, in this alternative embodiment, there is no calibrated axial clearance along the workpiece rotation axis R between the rolling member 5 and the workpiece 2. The rolling member 5 exerts an axial force on the load application surface 6 and said load application surface 6 transfers the axial force to the workpiece 2. Therefore, the workpiece 2 is clamped between the puller 32 and the rolling member 5, and it is thus possible to perform the axial and/or radial machining operation on the workpiece 2.

In one embodiment, the rolling member 5 comprises an inner ring 50 and an outer ring 51.

The inner ring 50 is engaged with and fixed to the tooling portion 43, so as to abut against the protruding portion 42.

The outer ring 51 is rotationally independent with respect to the inner ring 50 and acts as an axial end stop for the workpiece 2, so as to allow the execution of the axial and/or radial machining operation on the workpiece 2 without the use of the tailstock 31.

Preferably, the rolling member 5 is a bearing.

Alternatively, the rolling member 5 is made of one piece from a low-friction material, for example polytetrafluoroethylene, and is coupled rotationally free to the tooling portion 43.

In one embodiment, there is calibrated axial clearance between the outer ring 51 and the workpiece 2.

Alternatively, the outer ring 51 is adapted to abut against the load application surface 6. The axial force exerted by the outer ring 51 on the load application surface 6 is transferred to the workpiece 2 via said load application surface 6. The workpiece 2 is clamped between the puller 32 and the outer ring 51, and it is thus possible to perform the axial and/or radial machining operation on the workpiece 2 without the tailstock 31.

Preferably, the workpiece 2 comprises the load application surface 6; in particular, said load application surface 6 is a face engageable by the rolling member 5 or is a shoulder adapted to act as an abutment for said rolling member 5.

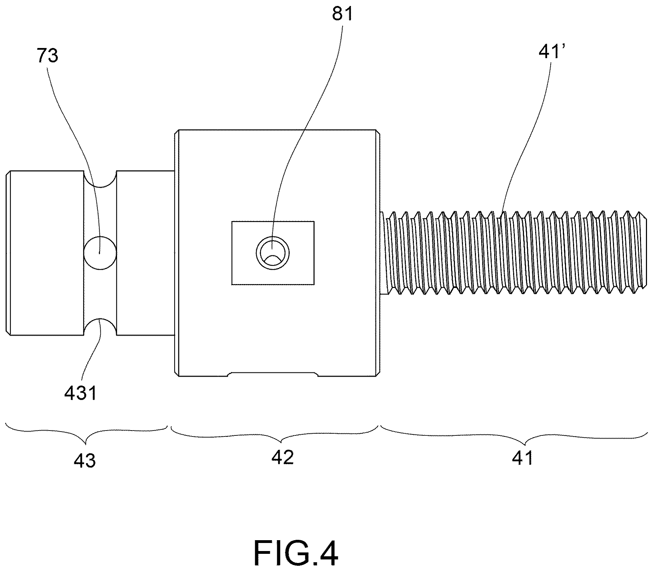

In one embodiment illustrated in figure 4, the coupling portion 41 comprises a threaded shank 41' axially elongated and engageable in the housing 30 (suitably tapped) obtained in the machine tool equipment 3.

According to one embodiment, a lubrication circuit 7 is obtained in the pin 4. Said lubrication circuit 7 is adapted to supply the coupling portion 41 and/or the tooling portion 43 with a lubricating fluid. In other words, the lubrication circuit 7 is fluidically connected with the coupling portion 41 and/or with the tooling portion 43.

Preferably, the lubrication circuit 7 comprises a first branch 71 for the inlet of the lubricating fluid and a second branch 72 and/or a third branch 73.

The second branch 72 is adapted to allow the outlet of the lubricating fluid at the coupling portion 41.

The third branch 73 is adapted to allow the outlet of the lubricating fluid at the tooling portion 43.

The lubrication circuit 7 is also provided with a central branch 74 extending predominantly along the pin axis P. Said central branch 74 connects the first branch 71 to the second branch 72 and/or to the third branch 73.

The lubrication circuit 7 allows the lubrication of the engagement of the coupling portion 41 in the housing 30 and/or allows the lubrication of the rolling member 5.

In one embodiment, the lubrication circuit 7 reduces the friction between the inner ring 50 and the outer ring 51 of the rolling member 5.

According to one embodiment, the lubrication circuit 7 allows the lubrication of the engagement between the tooling portion 43 and the rolling member 5.

In one embodiment, a first throat 431 is obtained in the tooling portion 43, preferably annular or helix-shaped. Said first throat 431 is fluidically connected to the lubrication circuit 7 to allow the lubrication of the rolling member 5.

In particular, the first throat 431 is fluidically connected to the third branch 73.

In this case, the lubricating fluid flows along the third branch 73, enters the first throat 431 and reaches the rolling member 5.

The lubricating fluid reduces the friction between the inner ring 50 and the outer ring 51 or reduces the friction between the tooling portion 43 and the rolling member 5 (in the case where the rolling member 5 is a one piece member).

According to one embodiment, a second throat 412 is obtained in the coupling portion 41, preferably annular or helix-shaped. Said second throat 412 is fluidically connected to the lubrication circuit 7 to supply the housing 30 with the lubricating fluid. In other words, the second throat 412 allows the lubrication of the housing 30.

In particular, the second throat 412 is fluidically connected to the second branch 72.

In this case, the lubricating fluid flows along the second branch 72, enters the second throat 412 and reaches the housing 30.

The housing 30 can be made according to different embodiments; therefore, the housing 30 may comprise:
i) a tapped hole made in the machine tool equipment 3, or
ii) the inner ring of a bearing, in the case where the machine tool equipment 3 is a steady rest provided with bearings that support the workpiece 2 radially, or
iii) balls or rollers of a bearing, in the case where the machine tool equipment 3 is a steady rest provided with ball or roller bearings that support the workpiece 2 radially. In this case iii), the coupling portion 41 acts as the inner ring of the ball or roller bearing, or
iv) the hub of a wheel, in the case where the machine tool equipment 3 is a steady rest provided with wheels that support the workpiece 2 radially.

According to one embodiment, a third throat 413 is obtained in the coupling portion 41, preferably annular or helix-shaped. Said third throat 413 is fluidically connected to the lubrication circuit 7 to facilitate the entry of the lubricating fluid into the lubrication circuit 7.

In detail, the presence of the first throat 431 and/or the second throat 412 and/or the third throat 413 improves lubrication.

According to one embodiment, a cooling circuit 8 adapted to apply a refrigerant fluid to the workpiece 2 during the machining operation is obtained in the protruding portion 42.

Preferably, the cooling circuit 8 comprises a first duct 81 for the inlet of the refrigerant fluid and a second duct 82 adapted to allow the outlet of the refrigerant fluid towards the workpiece 2.

According to one embodiment, the pin 4 is made of one piece.

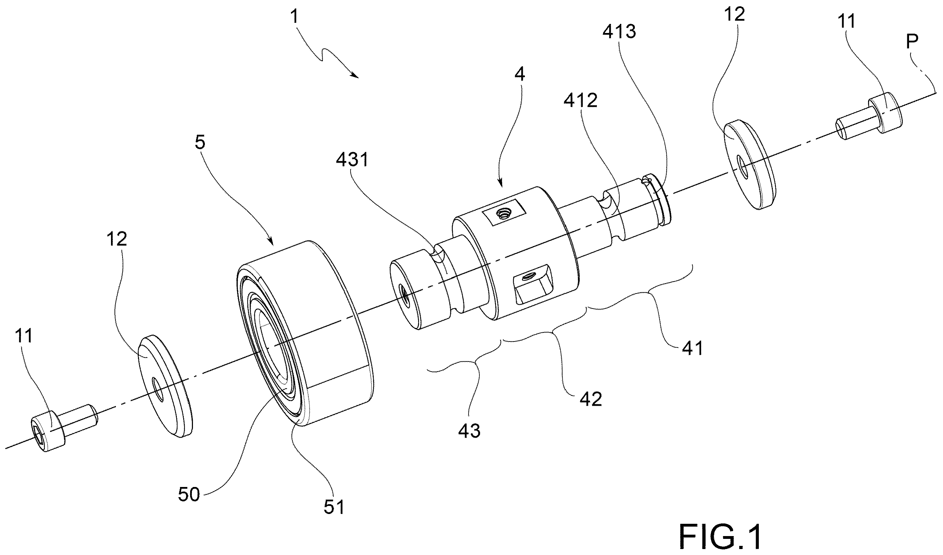

Preferably, the device 1 also comprises a pair of screws 11 and a pair of washers 12 which allow the connection of the pin 4 to the machine tool equipment 3 and to the rolling member 5 (figure 1).

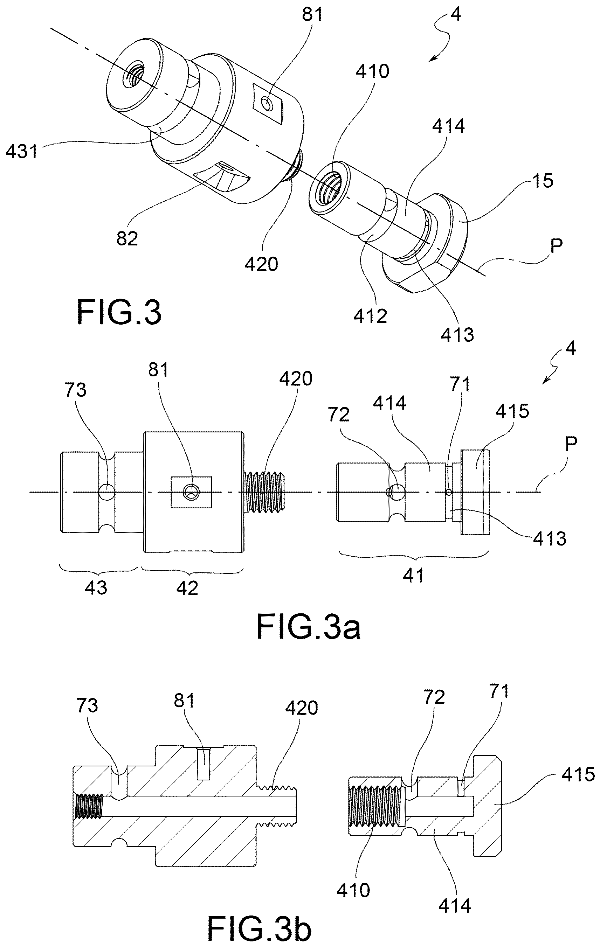

According to one embodiment illustrated in the accompanying figures 3-3b, the protruding portion 42 comprises a shank 420 protruding along the pin axis P and the coupling portion 41 comprises a seat 410 engageable by the shank 420 by shape and/or force coupling. Therefore, the mutual engagement between the seat 410 and the shank 420 creates the connection between the protruding portion 42 and the coupling portion 41.

Preferably, the seat 410 and the shank 420 form a coupling that makes the pin 4 monolithic.

In particular, the coupling between the seat 410 and the shank 420 is a threaded coupling.

In one embodiment, the coupling portion 41 comprises a stem 414 and a head 415. The radial size of the head 415 is greater than the radial size of the stem 414.

The seat 410 is obtained in the stem 414 and the stem 414 is insertable into the housing 30 of the machine tool equipment 3.

Once the stem 414 is inserted into the housing 30 and the engagement between the seat 410 and the shank 420 is made, the machine tool equipment 3 is axially enclosed between the head 415 on one side and the protruding portion 42 on the other.

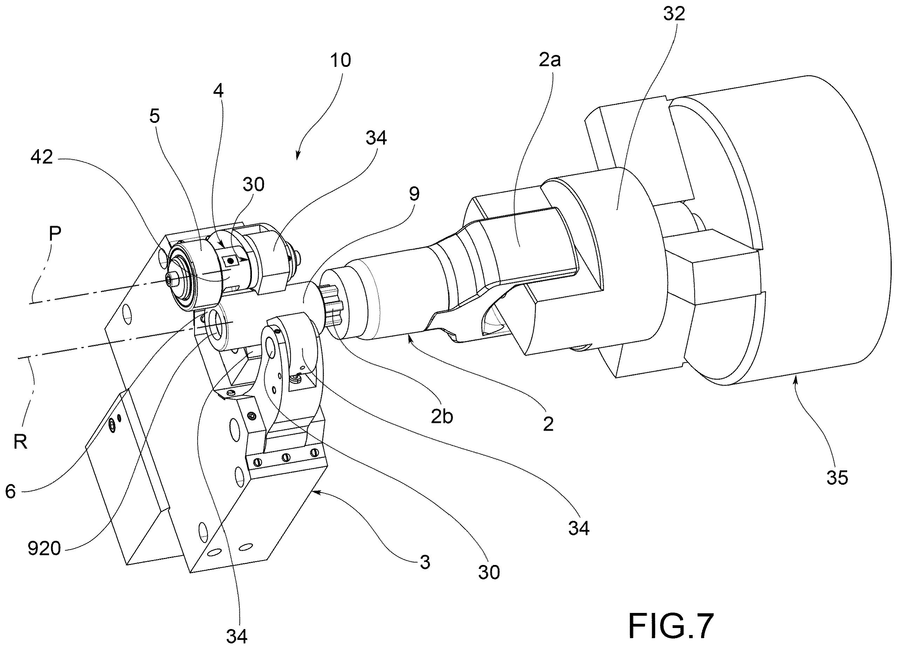

According to the present invention, a machining and support assembly 10 is also proposed, comprising the support device 1 and a jig 9 (figure 7).

The jig 9 is fittable onto the workpiece 2 so as to be integrally engaged with it. Therefore, the jig 9 is interposable between the workpiece 2 and the rolling member 5.

The rolling member 5 is adapted to act as an axial end stop for the workpiece 2 by means of the interposition of the jig 9, so as to allow the execution of the axial and/or radial machining operation on the workpiece 2 without the use of the tailstock 31.

Preferably, the jig 9 and the workpiece 2, once engaged, form a monolithic body.

The rolling member 5 is adapted to engage the jig 9 with calibrated axial clearance, i.e., there may be a gap between the jig 9 and the rolling member 5. In particular, the axial clearance between the rolling member 5 and the jig 9 allows a displacement of the workpiece 2 along the workpiece rotation axis R; said displacement is such that the workpiece 2 cannot fall to the ground due to a lack of axial support. By way of example, the displacement is in the order of tenths or hundredths of a millimetre.

According to an alternative embodiment, the rolling member 5 is adapted to abut against a load application surface 6; therefore, in this alternative embodiment, there is no calibrated axial clearance along the workpiece rotation axis R between the rolling member 5 and the jig 9. The rolling member 5 exerts an axial force on the load application surface 6; the load application surface 6 transfers the axial force to the jig 9, which in turn transfers the axial force to the workpiece 2. Therefore, the workpiece 2 is clamped between the puller 32 and the rolling member 5, and it is thus possible to carry out the axial and/or radial machining operation on the workpiece 2.

According to the embodiment in which the rolling member 5 comprises the inner ring 50 and the outer ring 51, the outer ring 51 acts as an axial end stop for the jig 9, thus allowing the execution of the axial and/or radial machining operation on the workpiece 2 without the use of the tailstock 31.

In one embodiment, there is a calibrated axial clearance between the outer ring 51 and the jig 9.

Alternatively, the outer ring 51 is adapted to abut against the load application surface 6. The axial force exerted by the outer ring 51 on the load application surface 6 is transferred to the jig 9 via said load application surface 6; said axial force is then transferred to the workpiece 2 via the jig 9. The workpiece 2 is clamped between the puller 32 and the outer ring 51, and it is thus possible to carry out the axial and/or radial machining operation on the workpiece 2 without the tailstock 31.

Preferably, the jig 9 comprises the load application surface 6 by means of which the axial force exerted by the support device 1 is transferable to the workpiece 2. In particular, said load application surface 6 is a face of the jig 9 engageable by the rolling member 5 or is a shoulder of the jig 9 adapted to act as an abutment for said rolling member 5.

Preferably, the jig 9 is axially hollow and is elongated along a direction parallel or coincident to the workpiece rotation axis R.

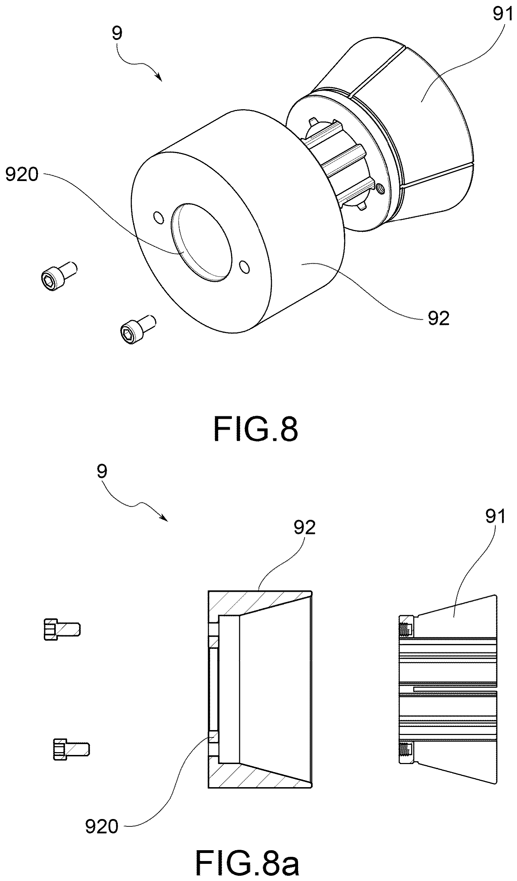

According to the embodiment illustrated in the accompanying figures 8-8a, the jig comprises an inner body 91 and an outer body 92 engageable with one another by shape and/or force coupling. Preferably, the inner body 91 and the outer body 92 form a conical coupling.

The inner body 91 is elastic and is engageable with an outer surface of the workpiece 2, so as to be coaxial with the workpiece 2.

Preferably, the inner body 91 is an elastic collet. Alternatively, the inner body 91 is counter-shaped to the outer surface of the workpiece 2.

The outer body 92 is substantially a hollow cylinder provided with a flange 920, preferably oriented radially inwards of the jig 9, said flange 920 being adapted to act as an abutment surface for the workpiece 2. The flange 920 may also act as a load application surface 6 for the rolling member 5.

According to one embodiment, the jig 9 is made of one piece and a through axial hole is obtained therein by means of which it is possible to fit the jig 9 onto the workpiece 2.

According to one embodiment, the machining and support assembly 10 also comprises the machine tool equipment 3.

A tapped hole engageable by the coupling portion 41 is obtained in the machine tool equipment 3 and/or the machine tool equipment 3 comprises a plurality of rolling elements 34 adapted to support the workpiece 2 radially.

In particular, the machine tool equipment 3 is a steady rest.

For example, the rolling elements 34 may be wheels or bearings.

In one embodiment, each rolling element of the plurality of rolling elements 34 is a wheel. Said wheel is delimited internally by a hub and externally by a rolling surface suitable for contact with the workpiece 2. The hub, instead, is engaged by the coupling portion 41.

According to one embodiment, each rolling element of the plurality of rolling elements 34 is a bearing. Said bearing comprises an inner bearing ring and an outer bearing ring. The outer bearing ring is suitable for contact with the workpiece 2; the inner bearing ring, instead, is engaged by the coupling portion 41.

According to an alternative embodiment, each rolling element of the plurality of rolling elements 34 is a bearing. Said bearing comprises rolling members, such as balls or rollers, for example, and an outer bearing ring. The coupling portion 41 acts as the inner bearing ring and is directly engageable with the rolling members.

Preferably, the machining and support assembly 10 also comprises a lathe 35 provided with a spindle and/or a puller 32. In this case, the puller 32 is engageable at a first end 2a of the workpiece 2 by shape and/or force coupling.

The invention also relates to a method for carrying out an axial and/or radial machining operation. The execution of the method provides for the preparation of a workpiece 2 with axial symmetry.

Preferably, a hole is made at a first end 2a of the workpiece 2.

A support device 1 and a lathe 35 provided with a puller 32 are also prepared.

The puller 32 engages the first end 2a of the workpiece 2 by shape and/or force coupling.

Preferably, the puller 32 engages the hole made at the first end 2a.

Additionally, a piece of machine tool equipment 3 is prepared for supporting the workpiece 2 radially.

After engaging the coupling portion 41 in the housing 30 of the machine tool equipment 3, the rolling member 5 is positioned so as to act as an axial end stop for the workpiece 2.

Finally, the axial and/or radial machining operation is carried out on the workpiece 2 without using the tailstock 31.

The rolling member 5 may be arranged so that there is a gap between the workpiece 2 and the rolling member 5; in other words, the rolling member 5 is engageable with the workpiece 2 with calibrated axial clearance. Alternatively, the rolling member 5 may be arranged in abutment against the load application surface 6 obtained on the workpiece 2, so that the axial force exerted by the rolling member 5 on the load application surface 6 is transferred to the workpiece 2.

In the embodiment in which the rolling member 5 comprises the inner ring 50 and the outer ring 51, the outer ring 51 acts as an axial end stop for the workpiece 2, so as to allow the execution of the axial and/or radial machining operation on the workpiece 2 without the use of the tailstock 31.

In one embodiment, there is calibrated axial clearance between the outer ring 51 and the workpiece 2.

Alternatively, the method provides for the outer ring 51 to abut against the load application surface 6 obtained on the workpiece 2, so that the support device 1 can apply the axial force on the workpiece 2.

In one embodiment of the method, a jig 9 is also provided.

The jig 9 is fitted onto the workpiece 2 and integrally engaged with it.

The rolling member 5 is positioned so as to act as an axial end stop for the workpiece 2 with the jig 9 interposed between the workpiece 2 and the rolling member 5.

Finally, the axial and/or radial machining operation is carried out on the workpiece 2 without the use of the tailstock 31.

In one embodiment, the rolling member 5 is adapted to engage the jig 9 with calibrated axial clearance.

According to an alternative embodiment, the rolling member 5 may be arranged in abutment against the load application surface 6 obtained on the jig 9, so that the axial force exerted by the rolling member 5 on said jig 9 is transferred to the workpiece 2.

According to the embodiment in which the rolling member 5 comprises the inner ring 50 and the outer ring 51, there is calibrated axial clearance between the outer ring 51 and the jig 9.

Alternatively, the method provides for the outer ring 51 to abut against the load application surface 6 obtained on the jig 9, so that the axial force applied by the support device 1 is transferred to the workpiece 2 via the jig 9.

Innovatively, the support device, the assembly and the method achieve the intended purpose.

Advantageously, the support device allows for the execution of axial and/or radial machining operations without the use of the tailstock when the workpiece is connected to the puller.

According to an advantageous aspect, the support device allows axial and/or radial machining operations to be carried out directly on the lathe without moving the workpiece to a machining centre.

According to a further advantageous aspect, the support device allows savings in terms of both man-hours and machine-hours.

To the embodiments of the support device, the assembly and the method, a person skilled in the art may make modifications or substitutions of elements with other functionally equivalent ones in order to meet contingent needs. Such modifications are also within the scope of protection as defined by the following claims. Furthermore, each of the variants described as belonging to a possible embodiment may be implemented independently in the other described embodiments.

## Claims

1. A support device (1) for axially supporting a workpiece (2) during a machining operation, preferably during a turning machining operation, said device (1) being adapted to be engaged with a piece of machine tool equipment (3), wherein the device comprises:
- a pin (4) having a main extension along a pin axis (P), said pin (4) comprising in axial sequence:
i) a coupling portion (41) adapted to be inserted into a housing (30) obtained in the machine tool equipment (3);
ii) a protruding portion (42) having a greater radial size than the coupling portion (41);
iii) a tooling portion (43) having a smaller radial size than the protruding portion (42),
- a rolling member (5) engaged with the tooling portion (43), said rolling member (5) acting as an axial end stop for the workpiece (2), so as to allow performing an axial and/or radial machining operation on the workpiece (2) without using a tailstock (31).

2. A device (1) according to the preceding claim, wherein a lubrication circuit (7) is obtained in the pin (4), said lubrication circuit being adapted to supply the coupling portion (41) and/or the tooling portion (43) with a lubricating fluid.

3. A device (1) according to the preceding claim, wherein a first throat (431), preferably annular or helix-shaped, is obtained in the tooling portion (43), said first throat (431) being fluidically connected to the lubrication circuit (7) in order to allow the lubrication of the rolling member (5).

4. A device (1) according to claim 2 or 3, wherein a second throat (412), preferably annular or helix-shaped, is obtained in the coupling portion (41), said second throat (412) being fluidically connected to the lubrication circuit (7) to supply the housing (30) with the lubricating fluid.

5. A device (1) according to any one of the preceding claims, wherein a cooling circuit (8) adapted to apply a refrigerant fluid to the workpiece (2) during the machining operation is obtained in the protruding portion (42) .

6. A device (1) according to any one of the preceding claims, wherein the pin (4) is obtained in one piece.

7. A device (1) according to any one of claims 1 to 5, wherein the protruding portion (42) comprises a shank (420) protruding along the pin axis (P), and wherein the coupling portion (41) comprises a seat (410) engageable by the shank (420) by shape and/or force coupling, so that the mutual engagement between the seat (410) and the shank (420) creates the connection between the protruding portion (42) and the coupling portion (41).

8. A device (1) according to the preceding claim, wherein the coupling portion (41) comprises a stem (414) and a head (415), wherein the radial size of the head (415) is greater than the radial size of the stem (414), and wherein the seat (410) is obtained into the stem (414), said stem (414) being insertable into the housing (30) of the machine tool equipment (3).

9. A machining and support assembly (10) comprising:
- a support device (1) according to any one of the preceding claims; and
- a jig (9) fittable onto the workpiece (2) and adapted to be integrally engaged with said workpiece (2), the jig (9) being further adapted to be interposed between the workpiece (2) and the rolling member (5),
wherein the rolling member (5) is adapted to act as an axial end stop for the workpiece (2) by the interposition of said jig (9), so as to allow performing the axial and/or radial machining on the workpiece (2) without using the tailstock (31).

10. A machining and support assembly (10) according to the preceding claim, also comprising a piece of machine tool equipment (3), wherein
a tapped hole engageable by the coupling portion (41) is drilled in said machine tool equipment (3), and/or
said machine tool equipment (3) comprises a plurality of rolling elements (34) adapted to support the workpiece (2) radially, in particular said machine tool equipment (3) being a steady rest.

11. A machining and support assembly (10) according to the preceding claim, wherein each rolling element of said plurality of rolling elements (34) is a wheel, said wheel being delimited internally by a hub and externally by a rolling surface suitable for contact with the workpiece (2), the hub being engaged by the coupling portion (41).

12. A machining and support assembly (10) according to claim 10, wherein each rolling element of said plurality of rolling elements (34) is a bearing, said bearing comprising an inner bearing ring and an outer bearing ring, wherein the outer bearing ring is suitable for contact with the workpiece (2) and the inner bearing ring is engaged by the coupling portion (41).

13. A machining and support assembly (10) according to claim 10, wherein each rolling element of said plurality of rolling elements (34) is a bearing, said bearing comprising rolling members, such as balls or rollers, for example, and an outer bearing ring, wherein the coupling portion (41) acts as the inner bearing ring and is directly engageable with the rolling members.

14. A machining and support assembly (10) according to any one of claims 9 to 13, also comprising a lathe (35) provided with a spindle and/or a puller (32), said puller (32) being engageable at a first end (2a) of the workpiece (2) by shape and/or force coupling.

15. A method for performing an axial and/or radial machining operation, comprising the following steps:
- providing a workpiece (2) with axial symmetry;
- providing a support device (1) according to any one of claims 1 to 8;
- providing a lathe (35) equipped with a puller (32);
- engaging the puller (32) at a first end (2a) of the workpiece (2) by shape and/or force coupling;
- providing a piece of machine tool equipment (3) for supporting the workpiece (2) radially;
- engaging the coupling portion (41) in the housing (30) of the machine tool equipment (3);
- positioning the rolling member (5) so as to act as an axial end stop for the workpiece (2);
- performing the axial and/or radial machining operation on the workpiece (2) without using the tailstock (31).

16. A method for performing an axial and/or radial machining operation according to the preceding claim, alco comprising the following steps:
- providing a jig (9);
- fitting the jig (9) onto the workpiece (2), so as to make the jig (9) integrally engaged with the workpiece (2);
- positioning the rolling member (5) so as to act as an axial end stop for the workpiece (2) with the jig (9) being interposed between the workpiece (2) and the rolling member (5);
- performing the axial and/or radial machining operation on the workpiece (2) without using the tailstock (31).
